(19) Europäisches Patentamt
European Patent Office
Office européen des brevets

(11) **EP 3 179 619 B1**

(12) **FASCICULE DE BREVET EUROPEEN**

(45) Date de publication et mention de la délivrance du brevet:
**10.05.2023 Bulletin 2023/19**

(21) Numéro de dépôt: **16195898.8**

(22) Date de dépôt: **27.10.2016**

(51) Classification Internationale des Brevets (IPC):
**H02J 3/01** (2006.01)   **H02M 1/12** (2006.01)
**H02M 1/15** (2006.01)

(52) Classification Coopérative des Brevets (CPC):
**H02M 1/12; H02J 3/01; H02M 1/15; Y02E 40/40**

(54) **SYSTEME DE FILTRAGE ACTIF**

**AKTIVES FILTERSYSTEM**

**ACTIVE FILTERING SYSTEM**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2015 FR 1561664**

(43) Date de publication de la demande:
**14.06.2017 Bulletin 2017/24**

(73) Titulaire: **Schneider Electric IT Corporation**
**Foxboro, MA 02035 (US)**

(72) Inventeur: **FRANCHINO, Roger**
**38050 GRENOBLE (FR)**

(74) Mandataire: **Murgitroyd & Company**
**Murgitroyd House**
**165-169 Scotland Street**
**Glasgow G5 8PL (GB)**

(56) Documents cités:
**DE-A1- 4 422 399   DE-C1- 4 406 402**

- **CASCONE V ET AL: "DESIGN OF ACTIVE FILTERS FOR DYNAMIC DAMPING OF HARMONIC CURRENTS GENERATED BY ASYNCHRONOUS DRIVES IN MODERN HIGH POWER LOCOMOTIVES", PROCEEDINGS OF THE ANNUAL POWER ELECTRONICS SPECIALISTS CONFERENCE (PESC). TOLEDO, JUNE 29 - JULY 3, 1992; [PROCEEDINGS OF THE ANNUAL POWER ELECTRONICS SPECIALISTS CONFERENCE (PESC)], NEW YORK, IEEE, US, vol. 1, 29 juin 1992 (1992-06-29), pages 404-410, XP000369055, DOI: 10.1109/PESC.1992.254852 ISBN: 978-0-7803-0695-0**
- **CARPITA M ET AL: "LINE FILTER FOR HIGH POWER INVERTER LOCOMOTIVE USING ACTIVE CIRCUITFOR HARMONIC REDUCTION, PROTOTYPE TESTS RESULTS", EPE '95: 6TH. EUROPEAN CONFERENCE ON POWER ELECTRONICS AND APPLICATIONS. SEVILLA, SEPT. 19 - 21, 1995; [EUROPEAN CONFERENCE ON POWER ELECTRONICS AND APPLICATIONS], BRUSSELS, EPE ASSOCIATION, B, vol. 1, 19 septembre 1995 (1995-09-19), pages 1.898-1.903, XP000537639,**
- **EL-HABROUK M ET AL: "Active power filters: A review", IEE PROCEEDINGS: ELECTRIC POWER APPLICATIONS, INSTITUTION OF ELECTRICAL ENGINEERS, GB, vol. 147, no. 5, 8 septembre 2000 (2000-09-08), pages 403-413, XP006014141, ISSN: 1350-2352, DOI: 10.1049/IP-EPA:20000522**

**EP 3 179 619 B1**

## Description

### Domaine technique de l'invention

La présente invention se rapporte à un système de filtrage actif. Le système de filtrage actif de l'invention sera notamment employé pour le filtrage des harmoniques de courant présents dans la bande de fréquence allant de 2kHz à 150kHz.

### Etat de la technique

Dans le domaine de la distribution électrique, il est connu que certains appareils électriques comme par exemple les convertisseurs de puissance, les variateurs de vitesse, les moteurs électriques, les solutions d'éclairage à néons ou à ampoules basse consommation, qui sont connectés au réseau électrique classique 50/60Hz, créent des harmoniques de courant. Ces harmoniques de courant sont néfastes pour le réseau électrique lui-même mais aussi pour les autres appareils électriques qui sont reliés au même réseau électrique. Ils ont aussi tendance à perturber la transmission des données par la technologie CPL (Courants Porteurs en Ligne). En effet, la bande de fréquence employée par la technologie CPL allant de 3kHz à 148,5kHz, notamment employée en domotique, peut se trouver polluée par la présence de certains convertisseurs de puissance, comme ceux qui comportent un étage redresseur actif et qui renvoient du courant sur le réseau. Le courant perturbateur renvoyé est généré sous forme triangulaire à une fréquence fondamentale allant de quelques kHz à quelques dizaines de kHz. Les systèmes de filtrage connus sont de type passif et comportent un ou plusieurs enroulements en cuivre. Ces solutions sont particulièrement encombrantes et donc difficiles à mettre en oeuvre.

On connaît le document suivant : V. Cascone, M. Galasso, L. Mantica and M. Oberti, "Design of active filters for dynamic damping of harmonie currents generated by asynchronous drives in modem high power locomotives," PESC '92 Record. 23rd Annual IEEE Power Electronics Specialists Conférence, 1992, pp. 404-410 vol.1, doi: 10.1109/PESC.1992.254852. Ce document divulgue un système de filtrage actif appliqué aux systèmes d'électrification ferroviaire comprenant des convertisseurs de fréquence pour alimenter des moteurs de traction asynchrones.

Le but de l'invention est de proposer un système de filtrage actif qui permette de filtrer un courant perturbateur présent dans une bande de fréquence allant de 2kHz à 150kHz, le système étant simple à mettre en oeuvre, fiable, peu encombrant et d'un coût réduit.

### Exposé de l'invention

Ce but est atteint par un système de filtrage actif selon la revendication 1. D'autres aspects avantageux de la présente invention sont donnés dans la revendication dépendante.

### Brève description des figures

D'autres caractéristiques et avantages vont apparaître dans la description détaillée qui suit faite en regard des dessins annexés dans lesquels :

- La figure 1 représente l'architecture du système de filtrage actif de l'invention et de son dispositif de commande, mis en oeuvre pour un réseau électrique d'alimentation,
- La figure 2 représente des courbes de simulation permettant d'illustrer le principe de fonctionnement du système de filtrage actif de l'invention.

### Description détaillée d'au moins un mode de réalisation

L'invention concerne un système de filtrage actif destiné à être connecté sur un réseau électrique d'alimentation.

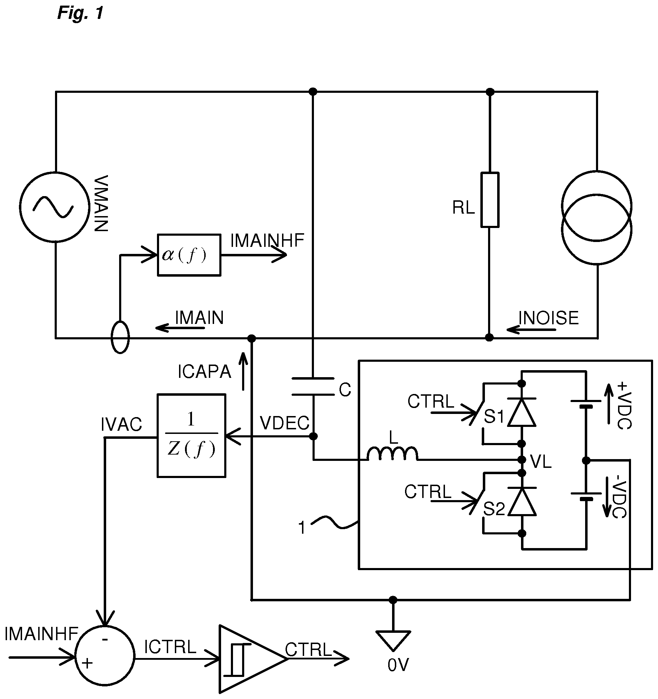

La figure 1 représente de manière schématique un réseau électrique d'alimentation fournissant entre deux lignes d'alimentation une tension VMAIN appliquée à un appareil électrique générant un courant électrique perturbateur sur ce réseau. Cet appareil électrique est schématisé par un générateur de courant et par une charge linéaire RL connectée en parallèle destinée à absorber le courant à la fréquence fondamentale fournie par le réseau.

Le système de filtrage actif de l'invention est destiné à se connecter en parallèle sur les deux lignes du réseau électrique d'alimentation et à s'intercaler entre ce réseau et l'appareil électrique générant le courant perturbateur, désigné INOISE.

Le système de filtrage actif de l'invention est commandé de manière à générer un courant de compensation ICAPA à ce courant perturbateur INOISE.

Comme représenté sur la figure 1, le système de filtrage actif de l'invention comporte un générateur de courant 1 commandé, un condensateur C connecté d'une part à la première ligne d'alimentation du réseau et d'autre part en série avec le générateur de courant 1 et un dispositif de commande agencé pour commander ce générateur de courant 1 en vue de générer le courant de compensation ICAPA défini ci-dessus.

Le générateur de courant 1 comporte une première borne connectée au condensateur C et une deuxième borne connectée à la deuxième ligne d'alimentation du réseau électrique. Entre ses deux bornes, le générateur de courant 1 comporte :

- Un convertisseur de tension comprenant deux interrupteurs S1, S2 connectés entre eux par un point milieu de connexion,
- Une inductance L connectée au point milieu de connexion et au condensateur C du système de filtrage,

- Une alimentation électrique continue bipolaire pouvant fournir deux tensions continues positive +VDC et négative -VDC, le point milieu entre les deux tensions étant connecté à la deuxième ligne d'alimentation.

Le dispositif de commande pourra être réalisé partiellement ou en totalité à l'aide de composants analogiques et/ou numériques.

Comme décrit ci-dessus, le dispositif de commande met en oeuvre deux boucles de contrôle distinctes pour contrôler le courant de compensation afin que celui-ci suive les variations du courant perturbateur.

Le dispositif de commande comporte un comparateur à hystérésis centré sur zéro et définissant des seuils de commutation +ih et -ih à partir d'un paramètre de commande ICTRL injecté en entrée du comparateur et déterminant en sortie la commande CTRL des deux interrupteurs du convertisseur de tension.

Les deux interrupteurs S1, S2 du convertisseur de tension sont commandés de façon complémentaire, c'est-à-dire que lorsque l'un d'eux est fermé, l'autre est ouvert et inversement.

Le premier interrupteur S1 est ainsi à commande positive, c'est-à-dire qu'il est à l'état fermé lorsque la commande, désignée CTRL, est supérieure au seuil auquel est ajouté l'hystérésis.

Le deuxième interrupteur S2 est ainsi à commande négative, c'est-à-dire qu'il est à l'état fermé si la commande CTRL est inférieure au seuil retranché de l'hystérésis.

Pour déterminer le paramètre de commande ICTRL, le dispositif de commande met en oeuvre les deux boucles de contrôle évoquées ci-dessus, dont les sorties respectives sont les courants IMAINHF et IVAC appliquées sur un sommateur destiné à déterminer une différence de courant correspondant au paramètre de commande ICTRL, suivant la relation :

$$ICTRL = IMAINHF - IVAC$$

De manière générale, la première boucle de contrôle est agencée pour contrôler le courant perturbateur pour ne laisser qu'un courant à haute fréquence de faible amplitude vers le réseau.

Plus précisément, la première boucle de contrôle est destinée à éliminer la composante basse fréquence du courant fourni par le réseau, c'est-à-dire la composante du courant à 50 ou 60Hz (selon la fréquence du réseau) et éventuellement les premières harmoniques basse fréquence en dessous de 2kHz. Cette première boucle comporte un filtre recevant en entrée le courant IMAIN mesuré par un capteur positionné sur une ligne du réseau électrique et déterminant en sortie un courant IMAINHF filtré conservant la composante ayant une fréquence supérieure à 2kHz du courant principal IMAIN.

Le filtre employé est par exemple de type réjecteur ou passe-haut et présente un gain désigné $\alpha(f)$.

De manière générale, la deuxième boucle de contrôle est destinée à asservir la tension au point de connexion entre le condensateur C et le générateur de courant 1 pour la centrer sur une valeur moyenne nulle en basse fréquence (c'est-à-dire en dessous de 2kHz pour l'invention).

Plus précisément, la deuxième boucle de contrôle est destinée à contrôler la tension de découplage VDEC mesurée au point de connexion entre le condensateur C et le générateur de courant 1 de manière à la maintenir à une valeur adaptée pour ne pas saturer le générateur de courant 1. Il s'agira par exemple de limiter cette tension de découplage VDEC à une valeur comprise entre les deux tensions d'alimentation +VDC et -VDC et préférentiellement de ramener la tension de découplage VDEC à une valeur proche de 0V. Pour cela, la deuxième boucle de contrôle applique une impédance fictive Z, qui vient se combiner avec la capacité du condensateur C et le filtre de la première boucle de contrôle pour ramener la tension de découplage VDEC à une valeur proche de 0V.

Dans la deuxième boucle de contrôle, la tension de découplage VDEC est employée pour déterminer le courant IVAC à partir de la relation suivante :

$$IVAC = \frac{VDEC}{Z(f)}$$

Le courant IMAINHF obtenu en sortie de la première boucle de contrôle et le courant IVAC obtenu en sortie de la deuxième boucle de contrôle sont appliqués sur un sommateur de la boucle de commande en vue de déterminer la différence de courant ICTRL. Comme décrit ci-dessus, cette différence ICTRL défini ci-dessus pour générer la commande des interrupteurs résulte en effet de la différence entre le courant IMAINHF et le courant IVAC selon la relation suivante :

$$ICTRL = IMAINHF - IVAC$$

Le principe de fonctionnement de l'invention est le suivant :

- Lorsque la différence ICTRL augmente jusqu'à atteindre le seuil haut +ih du comparateur, le comparateur en sortie génère une commande de commutation à destination des deux interrupteurs. La tension VL au point milieu entre les deux interrupteurs passe à +VDC.
- L'inductance L du générateur de courant génère alors une variation de courant qui va s'opposer à l'augmentation du courant ICTRL, entraînant ainsi une diminution de ce courant ICTRL.
- Lorsque la différence ICTRL diminue jusqu'à atteindre le seuil bas -ih, le comparateur génère en sortie une commande de commutation à destination des deux interrupteurs. La tension VL au point milieu entre les deux interrupteurs passe à -VDC.

- L'inductance L du générateur de courant génère alors une variation de courant qui va s'opposer à la diminution du courant ICTRL, entraînant ainsi une augmentation du courant ICTRL, jusqu'à ce que celui-ci atteigne à nouveau le seuil haut +ih.

On comprend ainsi que le courant ICTRL varie suivant un profil en dent de scie borné par -ih et +ih.

Préférentiellement, l'alimentation du générateur de courant est choisie de manière à fournir des tensions +VDC, -VDC de faible valeur, par exemple égales respectivement à +15V et -15V, ce qui permet d'employer des interrupteurs de type transistor à commutation rapide. Avec une alimentation fournissant par exemple +15V et -15V, on peut choisir des transistors capables de commuter à 500kHZ.

Cependant, comme la tension d'entrée VMAIN fournie par le réseau est très supérieure à la tension VDC fournie par l'alimentation du générateur de courant, il est nécessaire de contrôler la tension VDEC par la mise en place de la deuxième boucle de contrôle décrite ci-dessus. La deuxième boucle de contrôle permet ainsi de rendre la tension VDEC très peu sensible à la tension VMAIN fournie par le réseau.

La deuxième boucle de contrôle est destinée à éviter la saturation du générateur de courant en maintenant la tension VDEC dans une plage allant de -VDC à +VDC et préférentiellement autour d'une valeur proche de 0V. En effet, elle doit permettre de commander la différence de courant ICTRL qui présente alternativement une pente positive et une pente négative.

La deuxième boucle de contrôle permet de corriger le courant IMAINHF avec le courant IVAC qui est proportionnel à la tension de découplage VDEC et d'imposer le courant IMAINHF à suivre en moyenne l'expression

$$\frac{VDEC}{Z(f)}$$

et donc le courant IMAIN à suivre l'expression

$$\frac{VDEC}{\alpha Z(f)}.$$

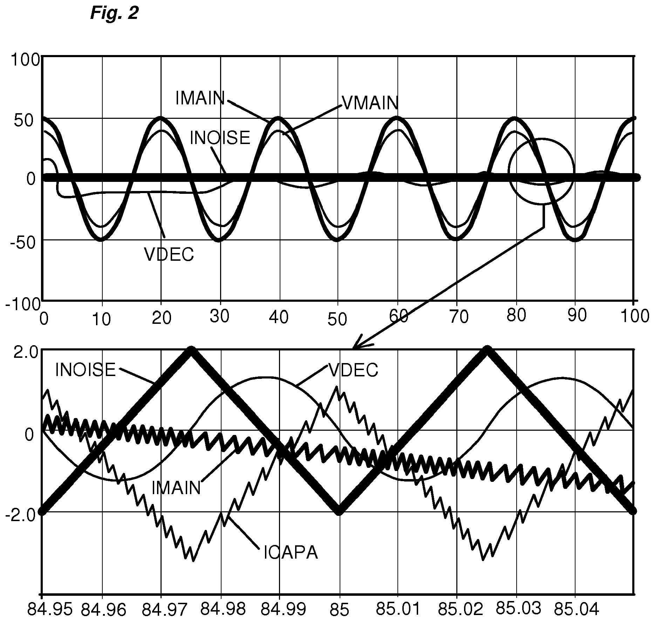

La figure 2 illustre le principe de fonctionnement de l'invention. Ces courbes de simulation ont été obtenues à partir des données d'entrée suivantes :

- Tension VMAIN=230V à une fréquence de 50Hz,
- Une charge consommant un courant de 40Aeff,
- Un courant perturbateur INOISE triangulaire de fréquence 20kHz et d'amplitude de 2A crête.

Sur les courbes, on peut voir ainsi que :

- La tension de découplage VDEC est très peu perturbée.
- Une composante de fréquence 50Hz et d'amplitude 5V est créée et a pour effet de dissymétriser la courbe en dent de scie du courant de compensation ICAPA.
- Les deux pentes de la courbe de courant ICAPA restent suffisamment raides pour que le courant de compensation suive bien le courant perturbateur INOISE à chaque instant.

Il faut comprendre que l'architecture du système de filtrage de l'invention dépendra du courant absorbé par la charge à la fréquence du réseau, de l'amplitude du courant perturbateur généré par la charge, de la fréquence et de la pente de ce courant perturbateur.

Le système de filtrage actif de l'invention permet d'obtenir un courant résiduel après filtrage qui ne contient qu'une composante haute fréquence, de valeur très supérieure à celle du courant perturbateur. Ce courant très haute fréquence pourra être filtré par un système additionnel. De cette manière, le réseau pourra alimenter la charge avec un courant à la fréquence normale de 50 ou 60Hz.

L'invention constitue une solution technique permettant de résoudre le problème des courants perturbateurs présents sur le réseau dans la bande de fréquence allant de 2kHz à 150kHz, ce que les solutions existantes ne parviennent pas à faire, ces solutions étant très souvent encombrantes car réalisées à base d'enroulements en cuivre.

Par ailleurs, la solution de l'invention présente de nombreux avantages, parmi lesquelles :

- Un coût réduit rendu possible par l'emploi de transistors basse tension,
- Une simplicité de mise en oeuvre en employant une loi de contrôle simple.

**Revendications**

1. Système de filtrage actif agencé pour se connecter en parallèle d'un réseau d'alimentation électrique fournissant un courant principal (IMAIN) d'alimentation incluant un courant perturbateur, ledit système comprenant :

- au moins un condensateur (C) destiné à être couplé à une première ligne d'alimentation du réseau d'alimentation électrique,
- un générateur de courant commandé comportant une alimentation électrique destiné à générer une tension déterminée positive (+VDC) ou une tension déterminée négative (-VDC) et connecté en série avec le condensateur via une première borne dudit générateur de courant (1), une deuxième borne dudit générateur de courant (1) étant destinée à être couplée à une deuxième ligne du réseau d'alimentation électrique,
- un dispositif de commande du générateur de courant (1) commandé, agencé pour commander le générateur de courant (1) commandé pour générer un courant de compensation (ICAPA) à appliquer au courant principal en vue de compenser ledit courant perturbateur (INOISE) tout en maintenant une tension de découplage (VDEC) mesurée au point de connexion entre le générateur de courant (1) commandé et ledit condensateur à une valeur adaptée pour ne pas saturer le générateur de courant commandé,
le générateur de courant (1) comportant en outre un convertisseur de tension comprenant deux interrupteurs (S1, S2) et une inductance (L) connectée en un point milieu situé entre les deux interrupteurs, les deux interrupteurs (S1, S2) étant commandés en complémentaire par le dispositif de commande pour appliquer une tension (VL) audit point milieu égale à ladite tension déterminée positive (+VDC) ou à ladite tension déterminée négative (-VDC),
le dispositif de commande comprenant :

- un comparateur à hystérésis agencé pour déterminer en sortie une commande (CTRL) à appliquer aux interrupteurs du convertisseur de tension à partir d'un paramètre de commande (ICTRL) appliqué en entrée,
- un filtre agencé pour filtrer le courant principal (IMAIN) en vue d'obtenir un premier courant à haute fréquence (IMAINHF),
- des moyens de détermination d'un deuxième courant (IVAC) à partir de ladite tension de découplage (VDEC), lesdits moyens de détermination étant agencés pour appliquer une impédance (Z) fictive à la tension de découplage (VDEC) en vue d'en déduire le deuxième courant (IVAC), ladite impédance fictive étant déterminée pour éliminer la composante basse fréquence de la tension de découplage (VDEC), et
- un sommateur agencé pour déterminer le paramètre de commande (ICTRL) par la différence entre le premier courant (IMAINHF) et le deuxième courant (IVAC).

2. Système selon la revendication 1, **caractérisé en ce que** les deux interrupteurs (S1, S2) sont composés chacun d'un transistor à commutation rapide, à une fréquence au moins supérieure à 500 kHz.

**Patentansprüche**

1. Ein aktives Filtersystem, das angeordnet ist, um mit einem Elektrizitätsversorgungsnetz, das einen Hauptversorgungsstrom (IMAIN) bereitstellt, der einen Störstrom enthält, parallel geschaltet zu werden, wobei das System Folgendes beinhaltet:

- mindestens einen Kondensator (C), der dazu bestimmt ist, mit einer ersten Versorgungsleitung des Elektrizitätsversorgungsnetzes gekoppelt zu werden,
- einen gesteuerten Stromgenerator, der eine Elektrizitätsversorgung umfasst, die dazu bestimmt ist, eine positiv bestimmte Spannung (+VDC) oder eine negativ bestimmte Spannung (-VDC) zu erzeugen, und die über einen ersten Anschluss des Stromgenerators (1) mit dem Kondensator in Reihe geschaltet ist, wobei ein zweiter Anschluss des Stromgenerators (1) dazu bestimmt ist, mit einer zweiten Leitung des Elektrizitätsversorgungsnetzes gekoppelt zu werden,
- eine Steuervorrichtung des gesteuerten Stromgenerators (1), die angeordnet ist, um den gesteuerten Stromgenerator (1) zu steuern, um einen Kompensationsstrom (ICAPA) zu erzeugen, der an den Hauptstrom angelegt werden soll, um den Störstrom (INOISE) zu kompensieren, während eine Entkopplungsspannung (VDEC), die an dem Verbindungspunkt zwischen dem gesteuerten Stromgenerator (1) und dem Kondensator gemessen wird, auf einem Wert gehalten wird, der geeignet ist, um den gesteuerten Stromgenerator nicht zu sättigen,
wobei der Stromgenerator (1) ferner einen Spannungswandler umfasst, der zwei Schalter (S1, S2) und eine Induktivität (L) beinhaltet, die an einem zwischen den zwei Schaltern befindlichen Mittelpunkt verbunden ist, wobei die zwei Schalter (S1, S2) von der Steuervorrichtung komplementär gesteuert werden, um an den Mittelpunkt eine Spannung (VL) anzulegen, die gleich der positiv bestimmten Spannung (+VDC) oder der negativ bestimmten Spannung (-VDC) ist,

wobei die Steuervorrichtung Folgendes beinhaltet:

- einen Komparator mit Hysterese, der angeordnet ist, um an dem Ausgang eine Steuerung (CTRL) zu bestimmen, die ausgehend von einem an dem Eingang angelegten Steuerparameter (ICTRL) auf die Schalter des Spannungswandlers angewendet werden soll,
- ein Filter, das angeordnet ist, um den Hauptstrom (IMAIN) zu filtern, um einen ersten Hochfrequenzstrom (IMAINHF) zu erhalten,
- Mittel zur Bestimmung eines zweiten Stroms (IVAC) ausgehend von der Entkopplungsspannung (VDEC), wobei die Mittel zur Bestimmung angeordnet sind, um eine fiktive Impedanz (Z) an die Entkopplungsspannung (VDEC) anzulegen, um daraus den zweiten Strom (IVAC) abzuleiten, wobei die fiktive Impedanz bestimmt wird, um die niederfrequente Komponente der Entkopplungsspannung (VDEC) zu eliminieren, und

- einen Addierer, der angeordnet ist, um den Steuerparameter (ICTRL) durch die Differenz zwischen dem ersten Strom (IMAINHF) und dem zweiten Strom (IVAC) zu bestimmen.

2. System gemäß Anspruch 1, **dadurch gekennzeichnet, dass** die zwei Schalter (S1, S2) jeweils aus einem bei einer Frequenz von mindestens mehr als 500 kHz schnell schaltenden Transistor bestehen.

**Claims**

1. An active filtering system arranged to be connected in parallel with an electrical power supply network providing a main power supply current (IMAIN) including a disturbing current, said system comprising:

- at least one capacitor (C) to be coupled to a first power supply line of the electrical power supply network,
- a controlled current generator comprising an electrical power supply intended to generate a positive determined voltage (+VDC) or a negative determined voltage (-VDC) and connected in series with the capacitor via a first terminal of said current generator (1), a second terminal of said current generator (1) being intended to be coupled to a second line of the electrical power supply network,
- a controlled current generator (1) control device, arranged in order to control the controlled current generator (1) to generate a compensating current (ICAPA) to be applied to the main current to compensate said disturbing current (INOISE) while maintaining a decoupling voltage (VDEC) measured at the connection point between the controlled current generator (1) and said capacitor at a value which is suitable to not saturate the controlled current generator, the current generator (1) further comprising a voltage converter comprising two switches (S1, S2) and an inductance (L) connected at a middle point situated between the two switches, the two switches (S1, S2) being controlled in a complementary manner by the control device so as to apply to said middle point a voltage (VL) equal to said positive determined voltage (+VDC) or to said negative determined voltage (-VDC),

the control device comprising:

- a hysteresis comparator arranged to determine at the output a control (CTRL) to be applied to the switches of the voltage converter based on a control parameter (ICTRL) which is applied at the input,
- a filter arranged so as to filter the main current (IMAIN) to obtain a first highfrequency current (IMAINHF),
- means for determining a second current (IVAC) from said decoupling voltage (VDEC), said determining means being arranged to apply a dummy impedance (Z) to the decoupling voltage (VDEC) to deduce therefrom the second current (IVAC), said dummy impedance being determined in order to eliminate the low-frequency component of the decoupling voltage (VDEC), and
- an adder arranged to determine the control parameter (ICTRL) by means of the difference between the first current (IMAINHF) and the second current (IVAC).

2. System according to claim 1, **characterized in that** the two switches (S1, S2) are each composed of a fast-switch transistor, at a frequency at least higher than 500 kHz.

**Fig. 1**

Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **V. CASCONE ; M. GALASSO ; L. MANTICA ; M. OBERTI.** Design of active filters for dynamic damping of harmonie currents generated by asynchronous drives in modem high power locomotives. *PESC '92 Record. 23rd Annual IEEE Power Electronics Specialists Conférence,* 1992, vol. 1, 404-410